# EUROPEAN PATENT APPLICATION

(11) **EP 4 734 234 A1**
(43) Date of publication of application: **29.04.2026**
(21) Application number: 25749152.2
(22) Date of filing: 23.01.2025
(51) Int. Cl.: H01M 10/6568, H01M 10/6556, H01M 10/6551, H01M 10/613, H01M 10/625, H01M 50/24, H01M 50/249, B60L 58/26

(54) **BATTERY APPARATUS AND ELECTRIC VEHICLE INCLUDING SAME**

(30) Priority: 30.01.2024 KR 20240013654; 28.10.2024 KR 20240148452
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2025/001281
(87) International publication number: WO 2025/165065

(57) **Abstract**

Disclosed herein relates to a battery device including: a base structure; a plurality of cell assemblies mounted on the base structure, each comprising a plurality of battery cells; and a top cover including a pair of outer walls coupled to the base structure and spaced apart from each other in a first direction and an upper plate covering the plurality of cell assemblies and having an upper cooling channel.

## Description

### [Technical Field]

The present disclosure relates to a battery device and an electric vehicle including the same.

This application claims the benefit of Korean Patent Application No. 10-2024-0013654, filed on January 30, 2024, and Korean Patent Application No. 10-2024-0148452, filed on October 28, 2024, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, as the manufacturing cost per unit capacity of secondary batteries has decreased dramatically due to improved energy density and economies of scale, and as battery electric vehicles (BEVs) have increased their range to be on par with fuel vehicles, the primary use of secondary batteries has shifted from mobile devices to mobility.

As secondary batteries are used in mobility, there is a growing need for secondary battery safety. If a secondary battery used in mobility is involved in an accident, such as a fire, it can endanger the life of the driver, so research on technologies to improve the safety of secondary batteries is essential.

### [Summary]

### [Technical Problem]

The problem that the technical ideas of the present disclosure seek to solve is to provide a battery device and an electric vehicle including the battery device.

### [Technical Solution]

To address the above-mentioned problem, the technical idea of the present invention provides a battery device including: a base structure; a plurality of cell assemblies mounted on the base structure, each comprising a plurality of battery cells; and a top cover comprising a pair of outer walls coupled to the base structure and spaced apart from each other in a first direction, a center wall coupled to the base structure and disposed between the pair of outer walls, and an upper plate covering the plurality of cell assemblies and having an upper cooling channel.

In exemplary embodiments, the battery device further includes a plurality of fastening bolts for coupling the pair of outer walls and the center wall to the base structure.

In exemplary embodiments, the base structure includes a lower cooling channel.

In exemplary embodiments, the battery device further includes: a lower inlet pipe coupled to the base structure, and conveying externally provided first cooling fluid to an inlet of the lower cooling channel; a lower outlet pipe coupled to the base structure, and conveying first cooling fluid provided at the outlet of the lower cooling channel to the outside; an upper inlet pipe coupled to the upper plate, and conveying externally provided second cooling fluid to an inlet of the upper cooling channel; and an upper outlet pipe coupled to the upper plate, and conveying the second cooling fluid provided at the outlet of the upper cooling channel to the outside.

In exemplary embodiments, the battery device further includes a separation wall coupled to the base structure and extends in the first direction, wherein the center wall of the top cover extends in a second direction intersecting the first direction, wherein some of the plurality of cell assemblies are spaced apart in the second direction with the separation wall in between, wherein some of the plurality of cell assemblies are spaced apart in the first direction with the center wall of the top cover in between.

In exemplary embodiments, the separation wall each includes a lower separation wall and an upper separation wall seated on the lower separation wall, wherein the upper separation wall is attached to the corresponding cell assembly among the plurality of cell assemblies, wherein the lower separation wall is spaced apart from the corresponding cell assemblies among the plurality of cell assemblies with the upper separation wall in between.

In exemplary embodiments, the battery device further includes: a thermal resin layer attached to each of the plurality of cell assemblies; and a tape disposed between the thermal resin layer and the base structure, wherein the tape includes a portion protruding outward from the thermal resin layer.

In exemplary embodiments, a portion of the tape is interposed between one of the pair of outer walls and the base structure.

In exemplary embodiments, the surface of the base structure vertically overlaps with one of the outer walls is coplanar with the surface of the base structure vertically overlaps with one of the plurality of cell assemblies.

In exemplary embodiments, the base structure includes an inclined surface extending from the surface of the base structure vertically overlaps with one of the pair of outer walls to the surface of the base structure vertically overlaps with one of the plurality of cell assemblies, wherein the inclined surface of the base structure contacts the tape.

In exemplary embodiments, the plurality of cell assemblies is each attached to the upper plate through a thermally conductive adhesive layer.

In exemplary embodiments, the battery device further includes: a heat dissipation fin connected to the plurality of cell assemblies; and a thermally conductive adhesive layer for attaching the heat dissipation fin to the upper plate.

To address the above-mentioned problem, the technical idea of the present invention provides an electric vehicle including: a vehicle frame; and a battery device connected to the vehicle frame, wherein the battery device includes: a base structure having a lower cooling channel; a plurality of cell assemblies mounted on the base structure, each comprising a plurality of battery cells; and a top cover comprising a pair of outer walls coupled to the base structure and spaced apart from each other in a first direction, a center wall coupled to the base structure and disposed between the pair of outer walls, and an upper plate covering the plurality of cell assemblies and having an upper cooling channel, wherein the vehicle frame is coupled to the top cover.

In exemplary embodiments, the vehicle frame includes: a front frame equipped with front wheels; and a rear frame equipped with rear wheels and spaced apart from the front frame, wherein the pair of outer walls of the top cover comprises a front protruding part protruding forward from the base structure and a rear protruding part protruding rearward from the base structure, wherein the front frame is coupled to the front protruding part of the pair of outer walls, and the rear frame is coupled to the rear protruding part of the pair of outer walls.

In exemplary embodiments, the electric vehicle further includes: a plurality of fastening bolts for coupling the pair of outer walls and the center wall to the base structure; a thermal resin layer attached to each of the plurality of cell assemblies; and a tape disposed between the thermal resin layer and the base structure.

### [Advantageous Effects]

According to the exemplary embodiments of the present disclosure, the battery device has a dual cooling structure that cools battery cells using a base structure with a lower cooling channel and a top cover with an upper cooling channel, thereby improving the cooling performance of the battery cells. Since the heat generation of the battery device can be effectively controlled, the safety of the battery device can be improved.

According to the exemplary embodiments of the present disclosure, defective cell assemblies can be easily separated from the frame, and defective cell assemblies can be replaced with normal cell assemblies. Since cell assemblies can be separated in units, maintenance costs for battery devices can be reduced.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a perspective view showing a battery device according to exemplary embodiments of the present disclosure.
FIG. 2 is a cross-sectional view of the battery device along the line II-II' in FIG. 1.
FIG. 3 is a cross-sectional view of the battery device along the line III-III' in FIG. 1.
FIGS. 4 and 5 are cross-sectional views showing a portion of the battery device.
FIGS. 6a to 6c are plan views illustrating manufacturing methods of the battery device according to exemplary embodiments of the present disclosure.
FIGS. 7a and 7b are cross-sectional views illustrating a method for separating the cell assembly of the battery device according to exemplary embodiments of the present disclosure.
FIG. 8 is a plan view of a battery device according to exemplary embodiments of the present disclosure.
FIGS. 9 and 10 are cross-sectional views showing a portion of a battery device according to exemplary embodiments of the present disclosure.
FIG. 11 is a cross-sectional view showing a portion of a battery device according to exemplary embodiments of the present disclosure.
FIG. 12 is a perspective view of a battery device according to exemplary embodiments of the present disclosure.
FIG. 13 is a perspective view of an electric vehicle according to exemplary embodiments of the present disclosure.
FIG. 14 is a perspective view showing a portion of an electric vehicle shown in FIG. 13.
FIG. 15 is a perspective view showing a method of separating a cell assembly from an electric vehicle according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

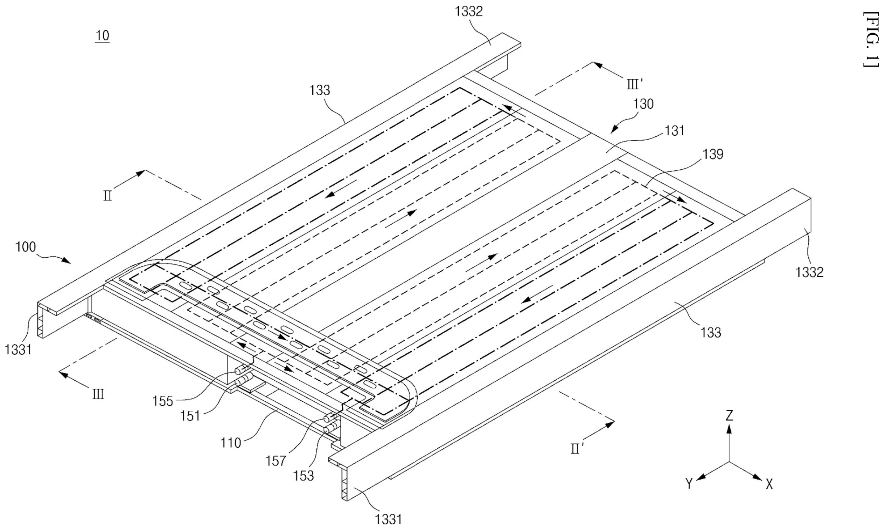

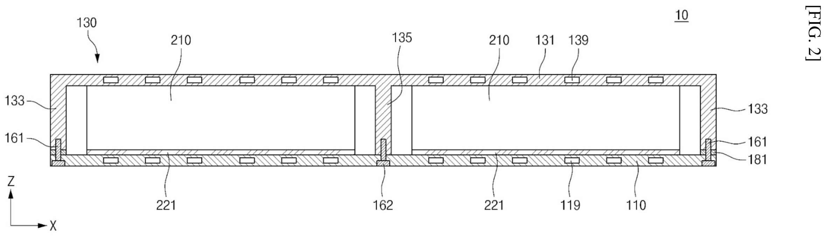

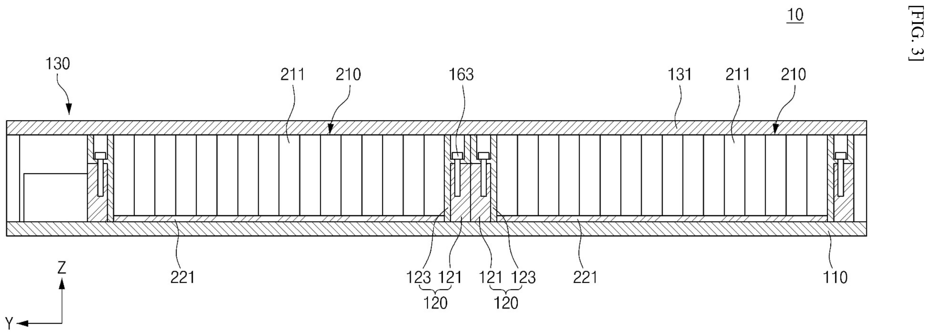

FIG. 1 is a perspective view of a battery device 10 according to exemplary embodiments of the present disclosure. FIG. 2 is a cross-sectional view of the battery device 10 along the line II-II' in FIG. 1. FIG. 3 is a cross-sectional view of the battery device 10 along the line III-III' in FIG. 1.

Referring to FIGS. 1 through 3, the battery device 10 may include a frame 100 and a plurality of cell assemblies 210 mounted within the frame 100.

Each cell assembly 210 may include a plurality of battery cells 211. Each battery cell 211 is a lithium-ion battery, which is the basic unit of a secondary battery. Each battery cell 211 may include an electrode assembly, an electrolyte, and a cell case. The electrode assembly embedded in the cell case may include a positive electrode, a negative electrode, and a separator interposed between the positive and negative electrodes. The electrode assembly may be either a jelly-roll type or a stack-type, depending on the assembly configuration. A jelly-roll type electrode assembly may include a wound structure comprising a positive electrode, a negative electrode, and a separator interposed between them. A stack-type electrode assembly may include a plurality positive electrodes and negative electrodes stacked sequentially, and a plurality of separators interposed between them. The positive electrode may include a positive electrode current collector and a positive electrode active material. The negative electrode may include a negative electrode current collector and a negative electrode active material.

A plurality of battery cells 211 may be connected in series and/or parallel. For example, a plurality of battery cells 211 may be connected in series with each other. For example, a plurality of battery cells 211 may also be connected in parallel with each other. For example, when defining a set of two or more battery cells 211 connected in parallel as a bank, one bank composed of two or more battery cells 211 connected in parallel and another bank composed of two or more battery cells 211 connected in parallel may be connected in series.

Each battery cell 211 may correspond to a pouch-type battery cell, a cylindrical battery cell, or a prismatic battery cell. The electrode assembly of the pouch-type battery cell is housed in a pouch case that includes an aluminum laminate sheet. The electrode assembly of the cylindrical battery cell is housed in a cylindrical metal can. The electrode assembly of the prismatic battery cell is housed in a prismatic metal can.

In exemplary embodiments, the cell assembly 210 may include a plurality of battery cells 211 stacked in a second horizontal direction (e.g., the Y direction). In the cell assembly 210, adjacent battery cells 211 among the plurality of battery cells 211 may be fixed to each other using an adhesive member such as an adhesive tape. The plurality of battery cells 211 may each correspond to pouch-type battery cells where the length in the first horizontal direction (e.g., the X direction) is greater than the length in the second horizontal direction (e.g., the Y direction). Each battery cell 211 may extend in a first horizontal direction (e.g., X direction), and each battery cell 211 may have electrode leads provided at both ends in the first horizontal direction (e.g., X direction). The electrode leads of adjacent battery cells 211 may be physically coupled.

When viewed in a planar view, the cell assembly 210 may have a rectangular shape. The cell assembly 210 may include an upper surface and a lower surface opposite each other in the vertical direction (e.g., the Z direction), first and second sides opposite each other in the first horizontal direction (e.g., the X direction), and third and fourth sides opposite each other in the second horizontal direction (e.g., the Y direction). The upper surface of the cell assembly 210 may include the upper surfaces of the plurality of battery cells 211, and the lower surface of the cell assembly 210 may include the lower surfaces of the plurality of battery cells 211.

The frame 100 may include a base structure 110, a top cover 130, and a separation wall 120.

The base structure 110 may generally have a flat plate shape extending in a first horizontal direction (e.g., the X direction) and a second horizontal direction (e.g., the Y direction). The base structure 110 may support a plurality of cell assemblies 210. A thermal resin layer 221 may be interposed between each of the plurality of cell assemblies 210 and the base structure 110. The plurality of cell assemblies 210 may each be physically and thermally coupled to the base structure 110 through the thermal resin layer 221. The thermal resin layer 221 may include, for example, a thermosetting resin and a thermally conductive filler.

The base structure 110 may include a lower cooling channel 119 configured to allow the first cooling fluid to flow. The base structure 110 may be coupled to a lower inlet pipe 151 and a lower outlet pipe 153. The lower inlet pipe 151 may convey the first cooling fluid provided from the outside to the inlet of the lower cooling channel 119. The lower outlet pipe 153 may convey the first cooling fluid provided from the outlet of the lower cooling channel 119 to the outside. The lower cooling channel 119 includes a first sub-channel extending in a first flow direction from the front to the rear of the frame 100, a second sub-channel extending in a second flow direction from the rear of the frame 100 toward the front, and a connecting channel extending in a direction perpendicular to the first flow direction and connecting the first sub-channel and the second sub-channel. The first cooling fluid may flow sequentially through the lower inlet pipe 151 into the inlet of the lower cooling channel 119, the first sub-channel, the connecting channel, the second sub-channel, and the lower outlet pipe 153. Cooling of the plurality of cell assemblies 210 may be performed while the first cooling fluid flows. The first cooling fluid may include coolant and/or refrigerant. In exemplary embodiments, each battery cell 211 may be thermally coupled to the base structure 110 through a thermal resin layer 221. In some exemplary embodiments, each battery cell 211 may also be thermally coupled to the base structure 110 through a heat dissipation fin 215.

The top cover 130 may be coupled to the base structure 110 to cover a plurality of cell assemblies 210. The top cover 130 may include a pair of outer walls 133, a center wall 135, and an upper plate 131. The top cover 130 may be a single integrated structure including a pair of outer walls 133, a center wall 135, and an upper plate 131. In exemplary embodiments, the cross-section of the top cover 130 may have an inverted-W shape.

The upper plate 131 may cover a plurality of cell assemblies 210. The upper plate 131 may generally have a flat plate shape extending in a first horizontal direction (e.g., the X direction) and a second horizontal direction (e.g., the Y direction).

A pair of outer walls 133 may be spaced apart in the first horizontal direction (e.g., X direction) with a plurality of cell assemblies 210 therebetween. Each outer wall 133 may extend in a second horizontal direction (e.g., the Y direction) and may extend in a vertical direction (e.g., the Z direction) between the upper plate 131 and the base structure 110. Each outer wall 133 may be fastened to the edge part of the base structure 110 by fastening bolts 161. A gasket 181 may be disposed between the bottom surface of each outer wall 133 and the upper surface of the base structure 110. The fastening bolts 161 may be inserted into the hole of the base structure 110 and the hole of the gasket 181, and fastened to the outer wall 133. For example, the fastening bolts 161 may pass through the base structure 110 and partially pass through the outer wall 133 in the vertical direction (e.g., the Z direction).

The length of each outer wall 133 in the second horizontal direction (e.g., the Y direction) may be longer than the length of the base structure 110 in the second horizontal direction (e.g., the Y direction). Each outer wall 133 may include a front protruding part 1331 protruding forward from the base structure 110 and a rear protruding part 1332 protruding rearward from the base structure 110.

The center wall 135 may include a center wall 135 disposed between a pair of outer walls 133 in the first horizontal direction (e.g., the X direction). The center wall 135 may extend in a second horizontal direction (e.g., the Y direction) and may extend in a vertical direction (e.g., the Z direction) between the upper plate 131 and the base structure 110. The center wall 135 may be spaced apart in the first horizontal direction (e.g., X direction) from some of the cell assemblies 210 among the plurality of cell assemblies 210 by the center wall 135. The center wall 135 may be fastened to the base structure 110 by fastening bolts 162. The length of the center wall 135 in the second horizontal direction (e.g., the Y direction) may be shorter than the length of the base structure 110 in the second horizontal direction (e.g., the Y direction).

The top cover 130 may include an upper cooling channel 139 configured to allow the second cooling fluid to flow. The upper cooling channel 139 may be provided in the upper plate 131. In some exemplary embodiments, the upper cooling channel 139 may be provided in the center wall 135 and/or the outer wall 133 in addition to the upper plate 131. In FIG. 1, the upper cooling channel 139 is shown with dashed lines and dotted lines. The upper plate 131 may be coupled to an upper inlet pipe 155 and an upper outlet pipe 157. The upper inlet pipe 155 may convey a second cooling fluid provided from the outside to the inlet of the upper cooling channel 139. The upper outlet pipe 157 may convey the second cooling fluid provided from the outlet of the upper cooling channel 139 to the outside. The upper cooling channel 139 includes a first sub-channel extending in a first flow direction from the front to the rear of the frame 100, a second sub-channel extending in a second flow direction from the rear of the frame 100 toward the front, and a connecting channel extending in a direction perpendicular to the first flow direction and connecting the first sub-channel and the second sub-channel. The second cooling fluid may flow sequentially through the upper inlet pipe (155) into the inlet of the upper cooling channel 139, the first sub-channel, the connecting channel, the second sub-channel, and the upper outlet pipe 157. Cooling of the multiple cell assemblies 210 may be performed while the second cooling fluid flows. The second cooling fluid may include coolant and/or refrigerant.

The separation wall 120 may be disposed on the base structure 110. The separation wall 120 may extend in a first horizontal direction (e.g., the X-direction) between a pair of outer walls 133. A separation wall 120 may be attached to each of the two sides of the individual cell assemblies 210 extending in the second horizontal direction (e.g., the Y direction).

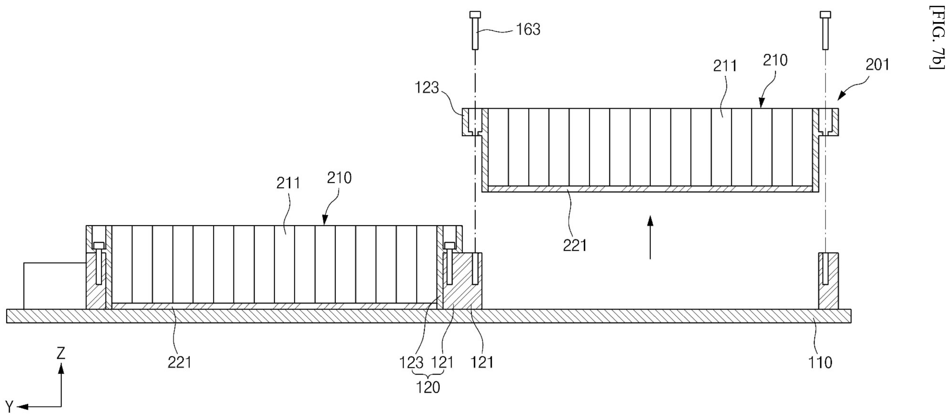

The separation wall 120 may include a lower separation wall 121 and an upper separation wall 123. The lower separation wall 121 may be fastened to the base structure 110. The upper separation wall 123 is placed on top of the lower separation wall 121 and may be fastened to the lower separation wall 121 via fastening bolts 163. The upper separation wall 123 may be attached to the side of a corresponding cell assembly 210 among the plurality of cell assemblies 210. The lower separation wall 121 may be spaced apart from the corresponding cell assembly 210 with the upper separation wall 123 in between. Each cell assembly 210 and the two upper separation walls 123 attached to both sides of the cell assembly 210 can together form a single unit (see 201 in FIG. 7b).

According to the exemplary embodiments of the present disclosure, the battery device 10 has a dual cooling structure that cools the battery cells 211 using a base structure 110 having a lower cooling channel 119 and a top cover 130 having an upper cooling channel 139, thereby improving the cooling performance for the battery cells 211. By effectively controlling the heat generation of the battery device 10, the safety of the battery device 10 can be improved.

### (Second embodiment)

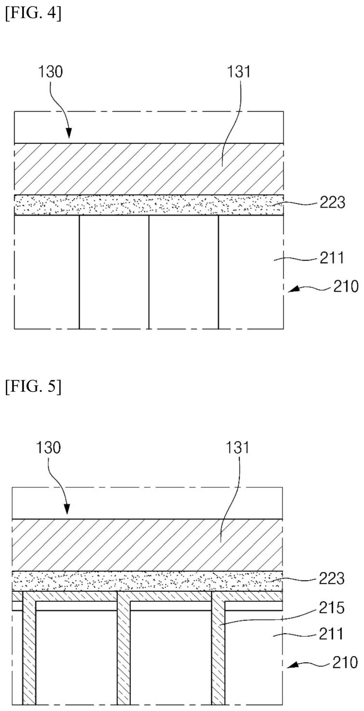

FIGS. 4 and 5 are cross-sectional views each showing a portion of the battery device 10.

Referring to FIG. 4, a thermally conductive adhesive layer 223 may be interposed between the cell assembly 210 and the upper plate 131 of the top cover 130. The battery cells 211 of the cell assembly 210 may be thermally and physically coupled to the upper plate 131 via the thermally conductive adhesive layer 223. For example, the thermally conductive adhesive layer 223 may include a thermally conductive resin and/or a thermal interface material (TIM).

Referring to FIG. 5, the cell assembly 210 may include a plurality of heat dissipation fins 215 attached to the battery cells 211. The plurality of heat dissipation fins 215 is attached to corresponding battery cells 211 among the plurality of battery cells 211 and may be attached to the upper plate 131 of the top cover 130 via the thermally conductive adhesive layer 223. The battery cells 211 may be thermally coupled to the upper plate 131 through the plurality of heat dissipation fins 215 and the thermally conductive adhesive layer 223. The plurality of heat dissipation fins 215 may include materials having excellent thermal conductivity, such as aluminum, copper, gold, silver, or an alloy thereof.

### (Third embodiment)

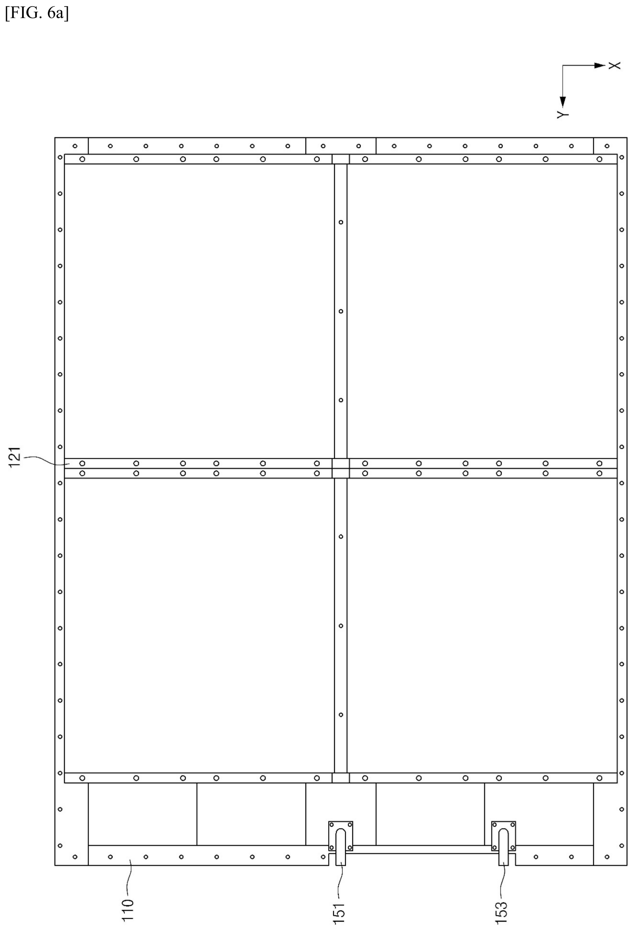

FIGS. 6a to 6c are plan views illustrating a manufacturing method for a battery device 10 according to exemplary embodiments of the present disclosure. Hereinafter, with reference to FIGS. 6a to 6c in conjunction with FIGS. 1 to 3, the manufacturing method for the battery device 10 described with reference to FIGS. 1 to 3 will be described.

Referring to FIG. 6a, a base structure 110 is prepared, and lower separation walls 121 are coupled onto the base structure 110.

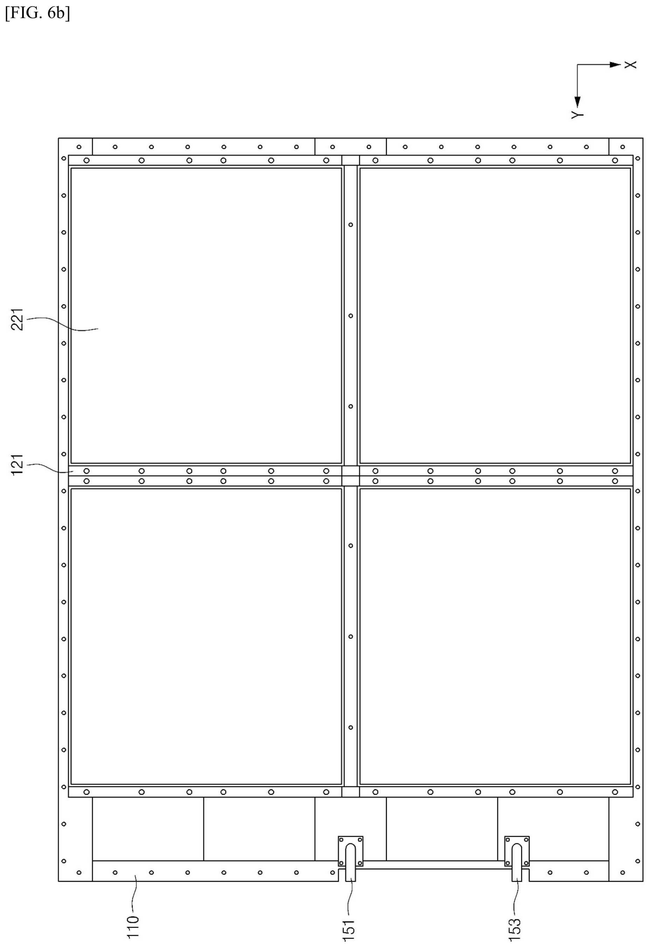

Referring to FIG. 6b, a thermal resin layer 221 is formed on the base structure 110. The thermal resin layer 221 may be formed by applying resin on the base structure 110.

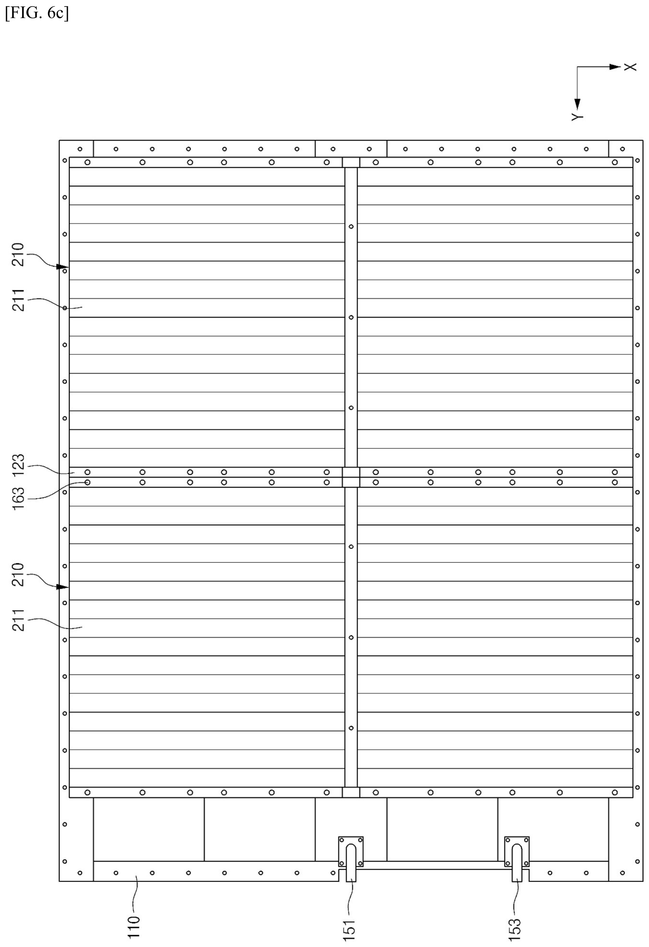

Referring to FIG. 6c, a plurality of cell assemblies 210 is mounted on the base structure 110. Mounting each cell assembly 210 on the base structure 110 includes: preparing a unit (refer to 201 in FIG. 7b) where the cell assembly 210 and upper separation walls 123 are attached to both sides of the cell assembly 210, positioning the unit 201 on the base structure 110 such that the lower surface of the cell assembly 210 contacts the thermal resin layer 221 and the upper separation wall 123 is seated on the lower separation wall 121, and fastening the upper separation wall 123 and the lower separation wall 121 with fastening bolts 163.

Referring to FIG. 1, the top cover 130 is fastened to the base structure 110. To fasten the top cover 130 to the base structure 110, the top cover 130 is positioned on the base structure 110, and the outer wall 133 is fastened to the base structure 110 using fastening bolts 161, and the center wall 135 is fastened to the base structure 110 using fastening bolts 162.

### (Fourth embodiment)

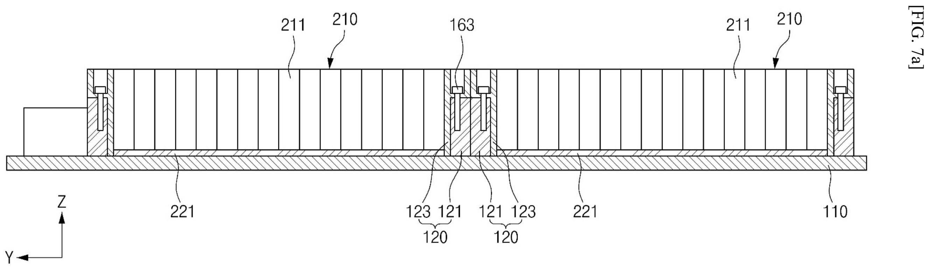

FIGS. 7a and 7b are cross-sectional views illustrating a method for separating the cell assembly 210 of the battery device 10 according to exemplary embodiments of the present disclosure. With reference to FIGS. 7a and 7b in conjunction with FIGS. 1 through 3, the method of separating the cell assembly 210 of the battery device 10 described with reference to FIGS. 1 through 3 is described below.

Referring to FIGS. 3 and 7a, the top cover 130 is separated from the base structure 110. To separate the top cover 130 from the base structure 110, fastening bolts 161 are removed from the outer wall 133 and the base structure 110, and fastening bolts 162 are removed from the center wall 135 and the base structure 110.

Referring to FIG. 7b, fastening bolts 163 are removed from the separation wall 120 so that the upper separation wall 123 becomes separable from the lower separation wall 121. Next, using a lifting device, the unit 201 including the cell assembly 210 is lifted to separate the cell assembly 210 from the base structure 110.

According to the exemplary embodiments of the present disclosure, a defective cell assembly 210 can be easily separated from the frame 100, and the defective cell assembly 210 can be replaced with a normal cell assembly 210. According to the exemplary embodiments of the present disclosure, since the cell assembly 210 can be separated in units, the maintenance costs of the battery device 10 can be reduced.

### (Fifth embodiment)

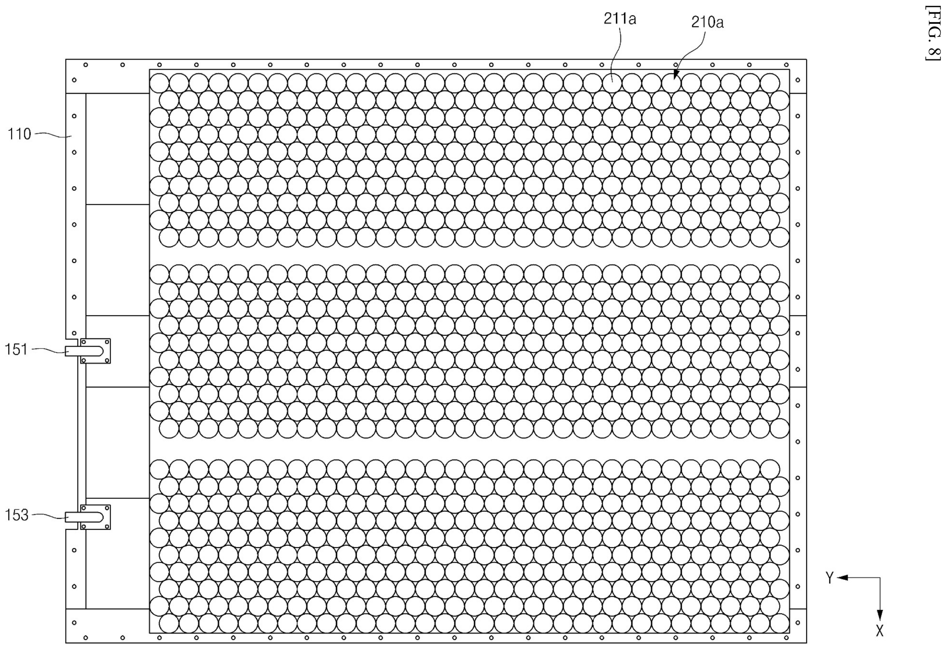

FIG. 8 is a plan view showing a battery device according to exemplary embodiments of the present disclosure. Hereinafter, the battery device shown in FIG. 8 will be described with reference to the differences from the battery device 10 described with reference to FIGS. 1 to 3.

Referring to FIG. 8, in the battery device, the battery cells 211a of the cell assembly 210a may each be cylindrical battery cells. The battery cells 211a may be arranged in a horizontal direction (e.g., in the X direction and Y direction) on the base structure 110.

### (Sixth Embodiment)

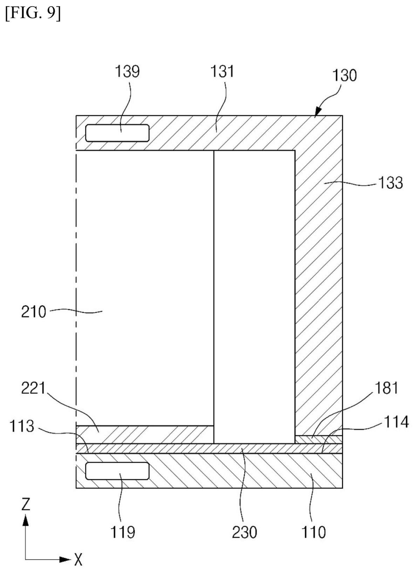

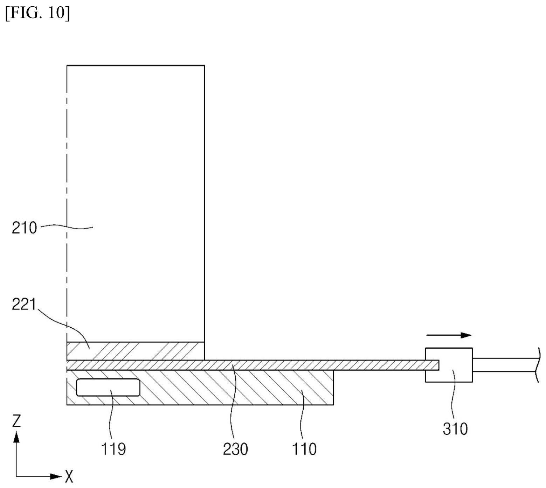

FIGS. 9 and 10 are cross-sectional views showing a portion of a battery device according to exemplary embodiments of the present disclosure. Hereinafter, with reference to FIGS. 1 to 3, the battery device shown in FIGS. 9 and 10 will be described with a focus on the differences from the battery device described in FIGS. 1 to 3.

Referring to FIGS. 9 and 10, in the battery device, a tape 230 may be interposed between the base structure 110 and the thermal resin layer 221. The cell assembly 210 may be thermally and physically coupled to the base structure 110 through the thermal resin layer 221 and the tape 230. The tape 230 may include a substrate layer and an adhesive layer coated on at least one of the upper surface and lower surface of the substrate layer. For example, the tape 230 may be a double-sided tape.

In exemplary embodiments, the tape 230 may protrude outward from the thermal resin layer 221. A portion of the tape 230 may not be covered by the cell assembly 210 and the thermal resin layer 221 and may protrude outward from the cell assembly 210 and the thermal resin layer 221.

In exemplary embodiments, a portion of the tape 230 may be interposed between the outer wall 133 of the top cover 130 and the base structure 110. In exemplary embodiments, the tape 230 may extend outward from the thermal resin layer 221 to the outer wall 133, but spaced away from the outer wall 133. In exemplary embodiments, the surface 114 of the base structure 110 overlapped in the vertical direction (e.g., Z direction) with the outer wall 133 of the top cover 130 may be coplanar with the surface 113 of the base structure 110 overlapped in the vertical direction (e.g., Z direction) with the cell assembly 210. The surface 114 of the base structure 110 overlapping in the vertical direction (e.g., Z direction) with the outer wall 133 of the top cover 130 and the surface 113 of the base structure 110 overlapped in the vertical direction (e.g., Z direction) with the cell assembly 210 may each be a flat surface.

In exemplary embodiments, the method of separating the cell assembly 210 of the battery device may include a step of removing the tape 230 after separating the top cover 130 from the base structure 110. For example, after gripping a portion of the tape 230 protruding from the thermal resin layer 221 with the extractor 310, the extractor 310 can be moved to remove the tape 230. At this time, the tape 230 may have sufficient tensile strength to prevent tearing of the tape 230 while pulling the tape 230 to remove it.

In the battery device according to the comparative example, the base on which the cell assembly is mounted has an outer wall covering the side of the cell assembly, and a flat pack lead is coupled to the outer wall of the base. In this case, even if the pack lead is removed, it is difficult to secure a working space to extract and remove the tape interposed between the cell assembly and the base, and the extraction path of the tape includes a curved path, so there is a risk that stress may concentrate on specific areas during the tape extraction process, causing the tape to break.

According to the exemplary embodiments of the present disclosure, by separating the top cover 130 from the base structure 110, a working space for extracting the tape 230 can be secured. Additionally, the tape 230 can be smoothly extracted along the extraction path of the tape 230 extending in the lateral direction (e.g., the X direction), thereby preventing the tape 230 from breaking during the tape extraction process. As a result, the process of separating the defective cell assembly 210 from the battery device can be made easier.

### (Seventh embodiment)

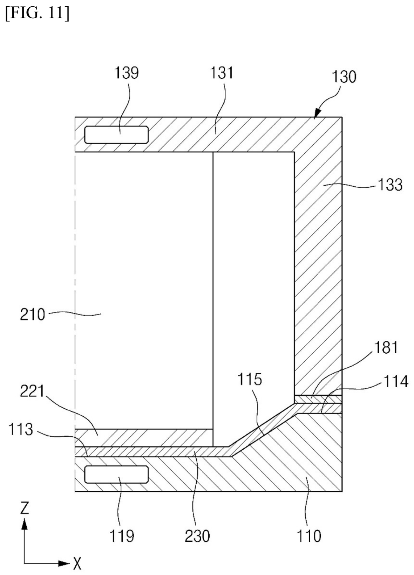

FIG. 11 is a cross-sectional view showing a portion of a battery device according to exemplary embodiments of the present disclosure. Hereinafter, the battery device shown in FIG. 11 will be described with reference to the differences from the battery device described with reference to FIGS. 9 and 10.

Referring to FIG. 11, the base structure 110 may include an inclined surface 115 extending obliquely from the surface 114 of the base structure 110 to the surface 113 of the top cover 130, i.e., inclined from the surface 113 of the base structure 110 overlapping with the cell assembly 210 in the vertical direction (e.g., Z direction) to the surface 114 of the base structure 110 overlapping with the outer wall 133 of the top cover 130 in the vertical direction (e.g., Z direction). The tape 230 may extend along the inclined surface 115 of the base structure 110. By separating the top cover 130 from the base structure 110, a working space is provided for extracting the tape 230, enabling the tape 230 to be smoothly extracted along the extraction path of the tape 230 extending in the lateral direction.

### (Eighth embodiment)

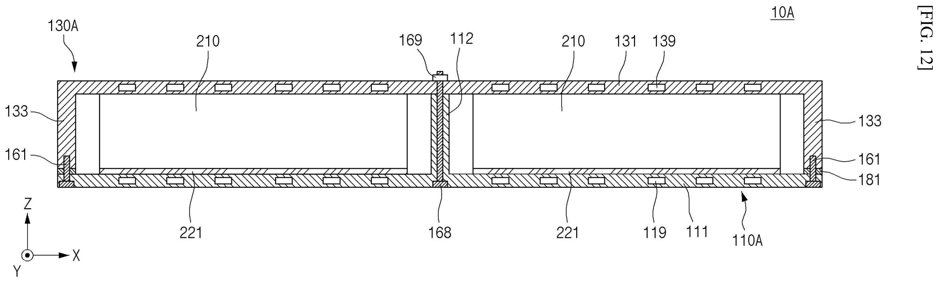

FIG. 12 is a perspective view showing a battery device 10A according to exemplary embodiments of the present disclosure. Herein, the battery device 10A shown in FIG. 12 will be described, focusing on the differences from the battery device 10 described with reference to FIGS. 1 to 3.

Referring to FIG. 12, in the battery device 10A, the top cover 130A may include a pair of outer walls 133 and an upper plate 131, and the base structure 110A may include a bottom plate 111 and a center wall 112 that support a plurality of cell assemblies 210. The center wall 112 of the base structure 110A may extend in a vertical direction (e.g., Z direction) from the bottom plate 111 to the upper plate 131 of the top cover 130A. The center wall 112 may be positioned between a pair of outer walls 133 of the top cover 130A. The center wall 112 may extend in a second horizontal direction (e.g., Y direction) along the bottom plate 111. Some of the cell assemblies 210 may be spaced apart in a first horizontal direction (e.g., X direction) with the center wall 112 between them.

The base structure 110A may be fastened to the upper plate 131 of the top cover 130A by fastening bolts 168. The fastening bolts 168 may be inserted into holes in the bottom plate 111, holes in the center wall 112, and holes in the upper plate 131. The fastening bolts 168 may pass through the bottom plate 111, the center wall 112, and the upper plate 131 in a vertical direction (e.g., Z direction). The fastening bolt 168 may include a protruding part protruding upward from the upper plate 131 of the top cover 130A, and a nut 169 may be coupled with the protruding part of the fastening bolt 168. By fastening the nut 169 to the protruding part of the fastening bolt 168, a coupling between the upper plate 131 of the top cover 130A and the center wall 112 of the base structure 110A can be achieved. For example, when coupling the top cover 130A and the base structure 110A, the fastening bolt 168 can be inserted into the hole in the bottom plate 111, the hole in the center wall 112, and the hole in the upper plate 131, and the nut 169 can be coupled to the protruding part of the fastening bolt 168. For example, when separating the top cover 130A and the base structure 110A, the nut 169 can be separated from the fastening bolt 168, and the fastening bolt 168 can be removed from the base structure 110A and the top cover 130A.

### (Nineth embodiment)

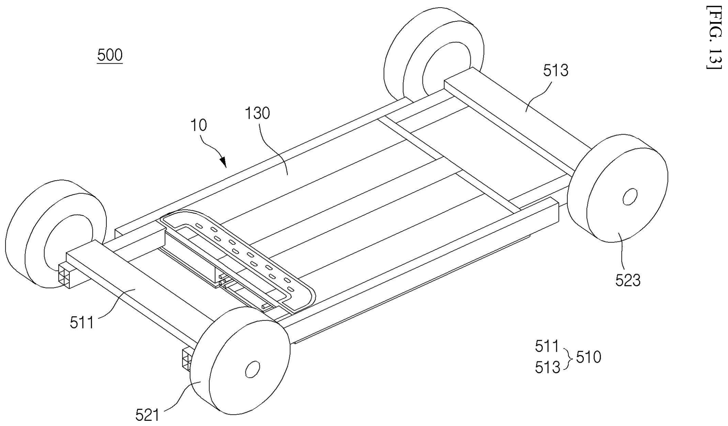

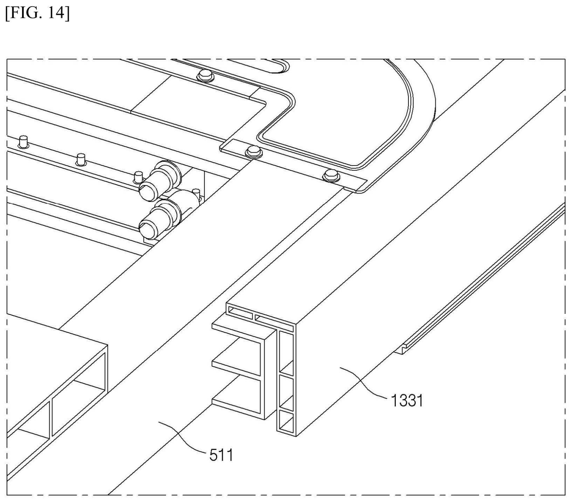

FIG. 13 is a perspective view showing an electric vehicle 500 according to exemplary embodiments of the present disclosure. FIG. 14 is a perspective view showing a portion of the electric vehicle 500 shown in FIG. 13.

Referring to FIGS. 13 and 14 together with FIG. 1, the electric vehicle 500 may include a vehicle frame 510 and a battery device 10. In FIGS. 13 and 14, for simplicity, only a portion of the electric vehicle 500 is shown.

The vehicle frame 510 may include a front frame 511 carrying front wheels 521 and a rear frame 513 carrying rear wheels 523. The front frame 511 and rear frame 513 may be spaced apart with the battery device 10 positioned between them.

The top cover 130 of the battery device 10 is coupled to the vehicle frame 510 and may form the vehicle chassis together with the vehicle frame 510. The battery device 10 may have a cell-to-chassis structure. The front frame 511 and rear frame 513 may each be coupled to the top cover 130. The front frame 511 may be coupled to a front protruding part 1331 of the outer wall 133 of the top cover 130, and the rear frame 513 may be coupled to a rear protruding part 1332 of the outer wall 133 of the top cover 130.

### (Tenth embodiment)

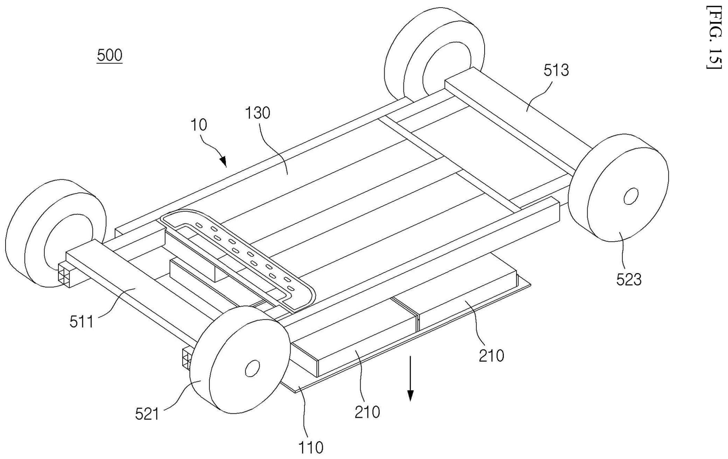

FIG. 15 is a perspective view illustrating a method for separating cell assemblies 210 in an electric vehicle 500 according to exemplary embodiments of the present disclosure.

Referring to FIGS. 1 through 3, FIG. 13, and FIG. 15, the base structure 110 to which the cell assemblies 210 are attached is separated from the top cover 130 by removing the fastening bolts 161, 162. Subsequently, a defective cell assembly 210 can be separated from the base structure 110 through a process substantially identical to the cell assembly 210 separation method described with reference to FIGS. 7a and 7b and/or the cell assembly 210 separation method described with reference to FIGS. 9 and 10.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery device comprising:
a base structure;
a plurality of cell assemblies mounted on the base structure, each comprising a plurality of battery cells; and
a top cover comprising a pair of outer walls coupled to the base structure and spaced apart from each other in a first direction and an upper plate covering the plurality of cell assemblies and having an upper cooling channel.

2. The battery device of claim 1, wherein,
the top cover further comprises a center wall disposed between the pair of outer walls and extending from the upper plate toward the base structure, wherein
some of the plurality of cell assemblies are spaced apart in the first direction with the center wall in between.

3. The battery device of claim 2, further comprising:
a plurality of fastening bolts for coupling the pair of outer walls and the center wall to the base structure.

4. The battery device of claim 1, wherein
the base structure comprises a lower cooling channel.

5. The battery device of claim 4, further comprising:
a lower inlet pipe coupled to the base structure, and conveying externally provided first cooling fluid to an inlet of the lower cooling channel;
a lower outlet pipe coupled to the base structure, and conveying first cooling fluid provided at the outlet of the lower cooling channel to the outside;
an upper inlet pipe coupled to the upper plate, and conveying externally provided second cooling fluid to an inlet of the upper cooling channel; and
an upper outlet pipe coupled to the upper plate, and conveying the second cooling fluid provided at the outlet of the upper cooling channel to the outside.

6. The battery device of claim 1, further comprising:
a separation wall coupled to the base structure and extends in the first direction, wherein
some of the plurality of cell assemblies are spaced apart in a second direction intersecting the first direction, with the separation wall interposed between them.

7. The battery device of claim 6, wherein
the separation wall each comprises a lower separation wall and an upper separation wall seated on the lower separation wall, wherein
the upper separation wall is attached to the corresponding cell assembly among the plurality of cell assemblies, wherein
the lower separation wall is spaced apart from the corresponding cell assemblies among the plurality of cell assemblies with the upper separation wall in between.

8. The battery device of claim 1, further comprising:
a thermal resin layer attached to each of the plurality of cell assemblies; and
a tape disposed between the thermal resin layer and the base structure, wherein
the tape comprises a portion protruding outward from the thermal resin layer.

9. The battery device of claim 8, wherein
a portion of the tape is interposed between one of the pair of outer walls and the base structure.

10. The battery device of claim 8, wherein
the surface of the base structure vertically overlaps with one of the pair of outer walls is coplanar with the surface of the base structure vertically overlaps with one of the plurality of cell assemblies.

11. The battery device of claim 8, wherein
the base structure comprises an inclined surface extending from the surface of the base structure vertically overlaps with one of the pair of outer walls to the surface of the base structure vertically overlaps with one of the plurality of cell assemblies, wherein
the inclined surface of the base structure contacts the tape.

12. The battery device of claim 1, wherein
the plurality of cell assemblies is each attached to the upper plate through a thermally conductive adhesive layer.

13. The battery device of claim 1, further comprising:
a heat dissipation fin connected to the plurality of cell assemblies; and
a thermally conductive adhesive layer for attaching the heat dissipation fin to the upper plate.

14. The battery device of claim 1, wherein
the base structure comprises a bottom plate supporting the plurality of cell assemblies and a center wall extending from the bottom plate toward the upper plate of the top cover, wherein
some of the plurality of cell assemblies are spaced apart in the first direction with the center wall interposed between them,
wherein the battery device further comprises fastening bolts that fasten the center wall of the base structure to the upper plate of the top cover, wherein the fastening bolts penetrate the bottom plate, the center wall, and the upper plate.

15. An electric vehicle comprising:
a vehicle frame; and
a battery device connected to the vehicle frame, wherein
the battery device comprises:
a base structure having a lower cooling channel;
a plurality of cell assemblies mounted on the base structure, each comprising a plurality of battery cells; and
a top cover comprising a pair of outer walls coupled to the base structure and spaced apart from each other in a first direction and an upper plate covering the plurality of cell assemblies and having an upper cooling channel,
the vehicle frame is coupled to the top cover.

16. The electric vehicle of claim 15, wherein
the vehicle frame comprises:
a front frame equipped with front wheels; and
a rear frame equipped with rear wheels and spaced apart from the front frame, wherein
each of the pair of outer walls of the top cover comprises a front protruding part protruding forward from the base structure and a rear protruding part protruding rearward from the base structure, wherein
the front frame is coupled to the front protruding part of the pair of outer walls, and
the rear frame is coupled to the rear protruding part of the pair of outer walls.

17. The electric vehicle of claim 15, wherein
the top cover further comprises a center wall disposed between the pair of outer walls and extending from the upper plate toward the base structure, wherein
some of the plurality of cell assemblies are spaced apart in the first direction with the center wall in between.

18. The electric vehicle of claim 17, further comprising:
a plurality of fastening bolts for coupling the pair of outer walls and the center wall to the base structure;
a thermal resin layer attached to each of the plurality of cell assemblies; and
a tape disposed between the thermal resin layer and the base structure.

19. The electric vehicle of claim 17, wherein
the top cover is a single integrated structure comprising the pair of outer walls, the upper plate, and the center wall.
